# FASCICULE DE BREVET EUROPEEN

(11) **EP 3 508 798 B1**
(45) Date de publication et mention de la délivrance du brevet: **11.03.2026**
(21) Numéro de dépôt: 19150377.0
(22) Date de dépôt: 04.01.2019
(51) Int. Cl.: F24F 11/84, F24F 11/65, F25B 13/00, F24D 17/02, F24D 11/02, F24D 15/04, F24F 140/12, F24F 140/20

(54) **PROCÉDÉ POUR UN SYSTÈME THERMODYNAMIQUE**
VERFAHREN EINES THERMODYNAMISCHEN SYSTEM
PROCESS FOR A THERMODYNAMIC SYSTEM

(30) Priorité: 08.01.2018 FR 1850125
(43) Date de publication de la demande: 10.07.2019
(73) Titulaire: ALDES AERAULIQUE, 69200 Venissieux Cedex (FR)
(72) Inventeur: VERGER, Florian, 17000 LA ROCHELLE (FR); BRETIN, Olivier, 69110 SAINTE-FOY-LES-LYON (FR)
(74) Mandataire: Germain Maureau

(56) Documents cités:
- EP-A2- 0 151 493
- EP-A2- 2 532 981
- WO-A1-2017/203655
- CN-A- 105 157 273
- CN-B- 103 353 169
- GB-A- 2 524 673
- US-A- 4 299 098
- US-A- 4 646 538

## Description

La présente invention concerne un procédé pour un système thermodynamique de chauffage et de climatisation d'un bâtiment, et de production d'eau chaude sanitaire.

Dans un bâtiment les postes consommant le plus d'énergie sont le chauffage et la climatisation de ce bâtiment, ainsi que la production d'eau chaude sanitaire, appelée « ECS ». Afin de réduire les consommations d'énergie et les émissions de gaz polluants, il est connu d'utiliser des systèmes thermodynamiques, appelés pompe à chaleur, permettant de récupérer une énergie calorifique d'un côté pour la redistribuer de l'autre grâce à la circulation d'un fluide frigorigène, comme par exemple dans le document EP0151493.

Le circuit du fluide frigorigène comporte un compresseur comprimant le fluide gazeux, puis un condenseur formant un échangeur thermique permettant un changement de phase exothermique pour passer en phase liquide, puis un détendeur, et enfin un évaporateur formant un échangeur thermique permettant un changement de phase endothermique pour passer en phase gazeuse.

Il est connu de réaliser un système à double service utilisant l'eau comme fluide caloporteur pour le chauffage, et éventuellement pour le refroidissement. Dans ce cas on dispose d'un circuit du fluide caloporteur comprenant un circulateur électrique, passant dans le condenseur pour récupérer les calories dégagées, pour ensuite les distribuer par une vanne trois voies vers un échangeur de chauffage du bâtiment, ou de chauffage d'un ballon d'eau chaude sanitaire.

Ce système à double service nécessite une boucle d'eau de chauffage qui ajoute des contraintes et des coûts, et entraîne des pertes thermiques, et électriques avec l'utilisation du circulateur. De plus la climatisation est limitée, avec une inertie élevée sur les changements de fonctions produisant du chaud ou du froid, due au volume de fluide caloporteur.

Un autre système connu utilise directement le fluide frigorigène qui passe successivement vers l'échangeur de chauffage du bâtiment puis vers l'échangeur de chauffage du ballon d'eau chaude, formant des condenseurs disposés en série récupérant les calories de ce fluide.

Toutefois ce système ne présente pas de possibilité de climatisation, et est très peu souple à cause des deux échangeurs en série. En particulier une utilisation trop importante du chauffage du bâtiment laisserait trop peu d'énergie dans le fluide arrivant dans le ballon d'eau chaude, et pourrait le refroidir.

En complément de ce dernier système il est connu d'ajouter deux vannes sur le circuit de fluide frigorigène, disposées en parallèle en aval du compresseur, une vanne dirigeant ce fluide vers le ballon d'eau chaude constituant un premier condenseur, ou alternativement l'autre vanne dirigeant ce fluide vers l'échangeur de chauffage du bâtiment constituant un deuxième condenseur. Les retours du ballon d'eau chaude et de l'échangeur de chauffage sont mis en commun pour venir en amont du détendeur.

On peut produire alternativement de l'eau chaude sanitaire, ou du chauffage du bâtiment. Cependant en mode de production de froid pour la climatisation, l'échangeur du ballon d'eau chaude ne pouvant être isolé ou vidé, la climatisation du bâtiment n'est pas possible à réaliser.

En complément de ce dernier système il est connu d'ajouter un circuit de fluide caloporteur comportant un circulateur, passant par le ballon d'eau chaude pour le réchauffer. Toutefois ce circuit de fluide caloporteur avec son circulateur ajoute des complications, et augmente les pertes d'énergie thermique et électrique.

La présente invention a notamment pour but d'éviter ces inconvénients de la technique antérieure.

L'invention a pour objet un procédé pour un système tel que décrit dans la revendication 1. Des modes préférés de l'invention sont décrits dans les revendications dépendantes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma d'un système thermodynamique non revendiqué mais pour illustrer l'invention, disposé pour un fonctionnement en chauffage du bâtiment ;
- la figure 2 est un schéma de ce système thermodynamique disposé pour un fonctionnement en chauffage du ballon d'eau chaude ;
- la figure 3 est un schéma de ce système thermodynamique disposé pour une climatisation du bâtiment ;
- les figures 4a, 4b et 4c présentent le fonctionnement des deux vannes trois voies du circuit de ce système, correspondant respectivement à un fonctionnement en chauffage du bâtiment, en chauffage du ballon d'eau chaude, et en climatisation du bâtiment.
- la figure 5 présente trois étapes successives de vidange d'un échangeur interne par transfert naturel, présentant en partie supérieure un passage de l'échangeur d'eau chaude à l'échangeur du bâtiment, et en partie inférieure inversement de l'échangeur du bâtiment à l'échangeur d'eau chaude ; et
- la figure 6 présente trois étapes successives de vidange d'un échangeur interne par pompage forcé, présentant en partie supérieure un passage de l'échangeur d'eau chaude à l'échangeur du bâtiment, et en partie inférieure inversement de l'échangeur du bâtiment à l'échangeur d'eau chaude.

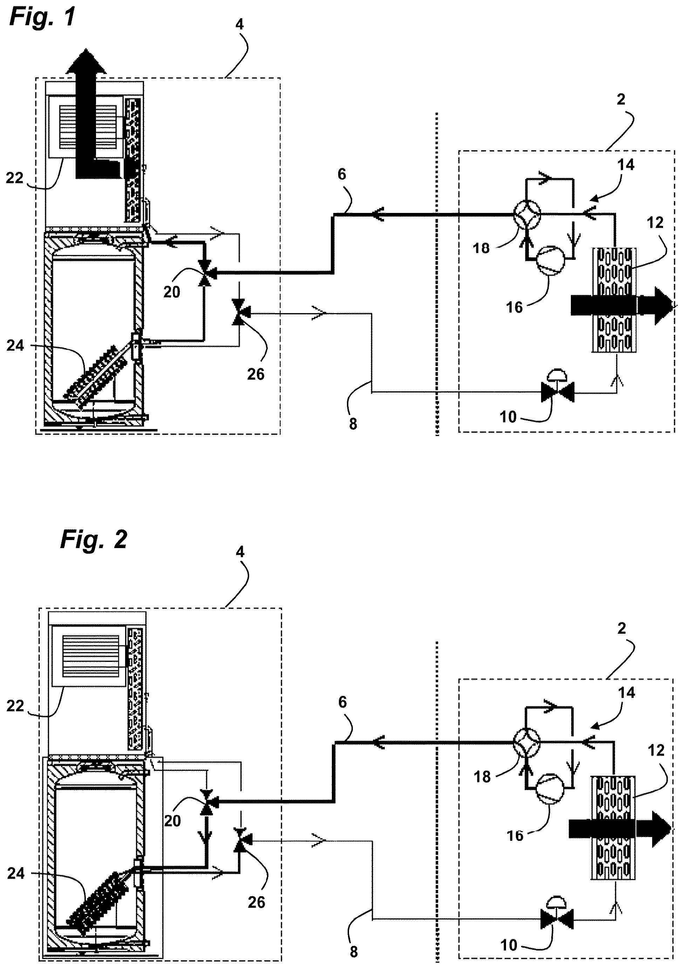

La figure 1 présente un circuit de fluide frigorifique comportant une première partie 2 comprenant un échangeur thermique d'échange avec un milieu extérieur du bâtiment, comme de l'air ou de l'eau, ou avec toutes autres sources comme des énergies fatales, appelé par la suite échangeur avec un milieu extérieur 12. La première partie 2 est reliée par une première canalisation 6 de ligne gaz et une deuxième canalisation 8 de ligne liquide à une deuxième partie intérieure d'un bâtiment 4.

La première partie 2 comporte successivement en partant de la deuxième canalisation 8, un détendeur 10 pouvant travailler dans les deux sens de circulation, l'échangeur avec un milieu extérieur 12, et un dispositif de compresseur 14 pouvant travailler dans les deux sens de circulation.

Le dispositif de compresseur 14 comporte une vanne quatre voies pilotée 18 insérée dans la première canalisation 6, comprenant deux voies reliées aux deux côtés interrompus de cette première canalisation, et deux autres voies reliées à un compresseur 16 travaillant dans un sens unique.

Une position de la vanne quatre voies 18 relie l'entrée du compresseur 16 à l'échangeur avec un milieu extérieur 12 et la sortie au bâtiment 4, pour faire circuler le fluide de cet échangeur vers le bâtiment, à l'inverse l'autre position de cette vanne relie l'entrée du compresseur au bâtiment et la sortie à l'échangeur avec un milieu extérieur pour faire circuler le fluide dans l'autre sens.

Dans la deuxième partie 4 la première canalisation 6 arrive sur une première vanne trois voies pilotée 20, pour relier alternativement ou simultanément cette canalisation à une extrémité d'un échangeur thermique interne de chauffage ou de climatisation du bâtiment 22, et à un échangeur thermique interne d'un ballon d'eau chaude 24. La deuxième canalisation 8 arrive sur une deuxième vanne trois voies pilotée 26, pour relier alternativement cette canalisation à l'autre extrémité de l'échangeur de chauffage et climatisation 22, ou de l'échangeur du ballon 24, ou pour fermer ces deux extrémités.

De cette manière, hormis le cas du pompage forcé du fluide d'un premier échangeur vers le deuxième échangeur, en commandant simultanément les deux vannes trois voies 20, 26 qui sont motorisées, on relie les deux canalisations 6, 8 uniquement sur l'échangeur de chauffage et climatisation 22 ou sur l'échangeur du ballon 24, pour faire travailler alternativement l'un ou l'autre, avec un fluide frigorigène qui peut circuler dans les deux sens.

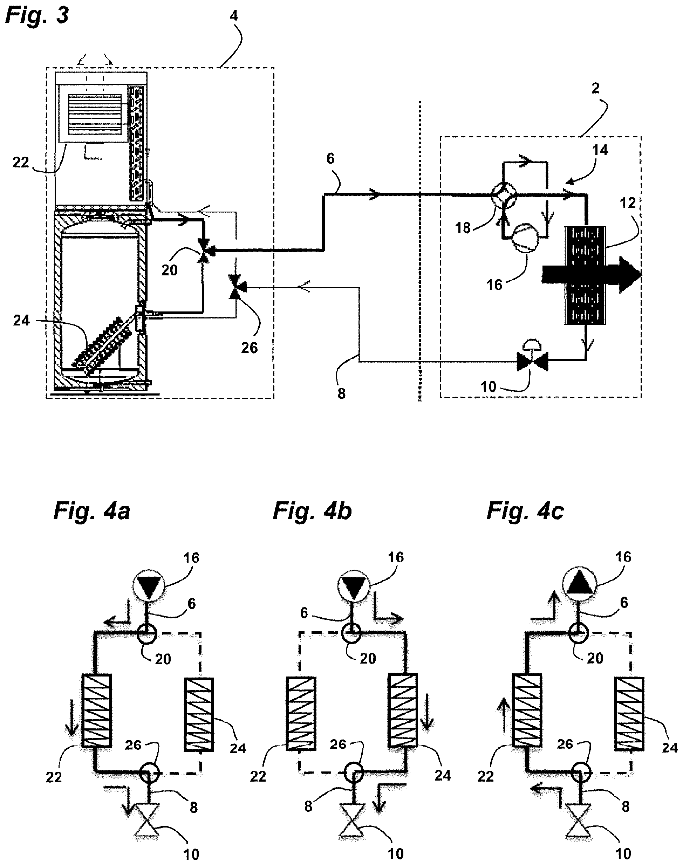

Les figures 1 et 4a présentent un fonctionnement en chauffage du bâtiment, la vanne quatre voies 18 étant disposée pour que le compresseur 16 prélève le fluide en phase gazeuse dans l'échangeur avec un milieu extérieur 12, et l'envoie sous pression dans la première canalisation 6.

Les deux vannes trois voies 20, 26 sont disposées pour qu'ensuite le fluide en phase gazeuse passe uniquement dans l'échangeur de chauffage et climatisation 22 où il se condense en dégageant des calories de chauffage vers ce bâtiment. Le fluide en phase liquide revient ensuite par la deuxième canalisation 8 vers le détendeur 10, qui fait chuter sa pression afin de l'évaporer dans l'échangeur avec un milieu extérieur 12.

Les figures 2 et 4b présentent un fonctionnement similaire en chauffage de l'eau chaude sanitaire, les deux vannes trois voies 20, 26 étant disposées pour que le fluide venant de la première canalisation 6 passe uniquement dans l'échangeur du ballon 24.

On obtient pour ces deux fonctionnements précédents un chauffage économique et simple du bâtiment ou de l'eau chaude en prélevant des calories sur l'évaporateur formé par l'échangeur avec un milieu extérieur 12, qui sont redistribuées directement par le fluide frigorigène avec un bon rendement, vers le bâtiment ou le ballon d'eau chaude.

Les figures 3 et 4c présentent un fonctionnement en refroidissement du bâtiment 4. Les vannes trois voies 20, 26 sont disposées pour relier les deux canalisations 6, 8 uniquement à l'échangeur de chauffage et climatisation 22. La vanne quatre voies 18 est disposée pour que le compresseur 16 prélève le fluide dans la première canalisation 6 de ligne gaz et par extension de l'échangeur de chauffage et climatisation 22, et le refoule vers l'échangeur avec un milieu extérieur 12.

On obtient pour ce circuit avec aussi un bon rendement, une condensation du fluide en phase vapeur sous pression dans l'échangeur avec un milieu extérieur 12, qui évacue ses calories, et après le détendeur 10 une évaporation du fluide en phase liquide à basse pression dans l'échangeur de chauffage et climatisation 22 qui absorbe des calories en refroidissant ce bâtiment.

Ces différents fonctionnements nécessitent un isolement complet de l'échangeur interne 22 ou 24 qui n'est pas en service, avec les deux vannes trois voies motorisées 20, 26 fermant complètement cet échangeur. Ils nécessitent aussi en cas de changement le transfert de suffisamment de fluide dans l'échangeur interne 22 ou 24 devenant actif, en vidant le fluide frigorigène de l'échangeur devenant inactif.

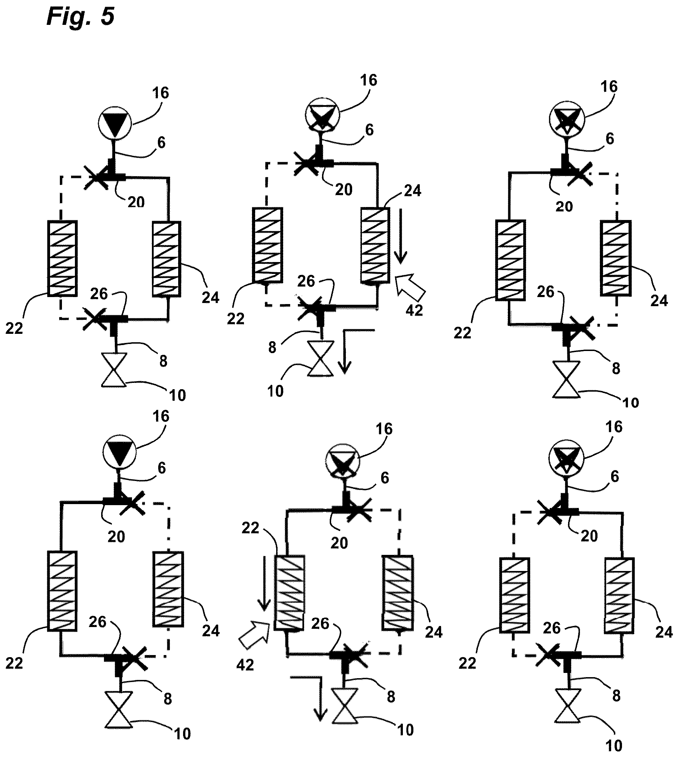

La figure 5 présente une première méthode de vidange par transfert naturel. La partie supérieure présente une utilisation qui transfert le fluide de l'échangeur du ballon d'eau chaude 24 vers l'échangeur de chauffage et climatisation 22.

Le premier schéma de la partie supérieure présente une position initiale de fonctionnement avec l'échangeur du ballon 24, les deux vannes trois voies 20, 26 sont ouvertes vers cet échangeur et fermées vers l'échangeur de chauffage et climatisation 22. Le compresseur 16 est activé s'il est initialement désactivé, pour augmenter la température de condensation dans l'échangeur du ballon 24.

Cette chauffe surveillée grâce à une sonde de température ou un capteur de pression, ou tout autre moyen permettant de contrôler la pression, est arrêtée lorsque la température de condensation souhaitée est considérée comme suffisante pour créer une différence de pression positive entre l'échangeur du ballon 24 et l'échangeur avec un milieu extérieur 12.

Le deuxième schéma de la partie supérieure présente une étape suivante où le compresseur est arrêté.

Le fluide évaporé dans l'échangeur du ballon 24 se déplace rapidement vers l'échangeur avec un milieu extérieur 12 présentant une température plus froide, où il se condense. Un appoint d'énergie avec un système de chauffage indépendant 42, notamment électrique, pour chauffer peut également être utilisé en complément afin de favoriser le transfert.

Une fois le transfert fini après quelques minutes, on passe à l'étape suivante présentée par le troisième schéma de la partie supérieure, où on bascule les deux vannes trois voies 20, 26 pour fermer l'échangeur du ballon 24 et ouvrir l'échangeur de chauffage et climatisation 22. On peut ensuite procéder au chauffage ou à la climatisation du bâtiment, en faisant circuler le fluide qui se trouve initialement entièrement dans l'échangeur avec un milieu extérieur 12.

La partie inférieure présente une utilisation transférée de l'échangeur de chauffage et climatisation 22 vers l'échangeur du ballon d'eau chaude 24, qui se fait de manière similaire à celle présentée ci-dessus en inversant les rôles de ces deux échangeurs.

Le premier schéma de la partie inférieure présente une position initiale de fonctionnement avec l'échangeur de chauffage et climatisation 22, les deux vannes trois voies 20, 26 sont ouvertes vers cet échangeur et fermées vers l'échangeur du ballon 24. Le compresseur 16 est activé s'il est initialement désactivé, pour augmenter la température de condensation dans l'échangeur de chauffage et climatisation 22.

Cette chauffe surveillée grâce à une sonde de température ou un capteur de pression, ou tout autre moyen permettant de contrôler la pression, est arrêtée lorsque la température de condensation souhaitée est considérée comme suffisante pour créer une différence de pression positive entre l'échangeur de chauffage et climatisation 22 et l'échangeur avec un milieu extérieur 12.

Le deuxième schéma de la partie inférieure présente une étape suivante où le compresseur 16 est arrêté. Le fluide évaporé dans l'échangeur de chauffage et climatisation 22 grâce à l'apport de calories, se déplace rapidement vers l'échangeur avec un milieu extérieur 12 présentant une température plus froide, où il se condense. Un appoint d'énergie électrique pour chauffer peut également être utilisé en complément pour favoriser le transfert.

Une fois le transfert fini, après quelques minutes on passe à l'étape suivante présentée par le troisième schéma de la partie inférieure, où on bascule les deux vannes trois voies 20, 26 pour fermer l'échangeur de chauffage et climatisation 22 et ouvrir l'échangeur du ballon 24.

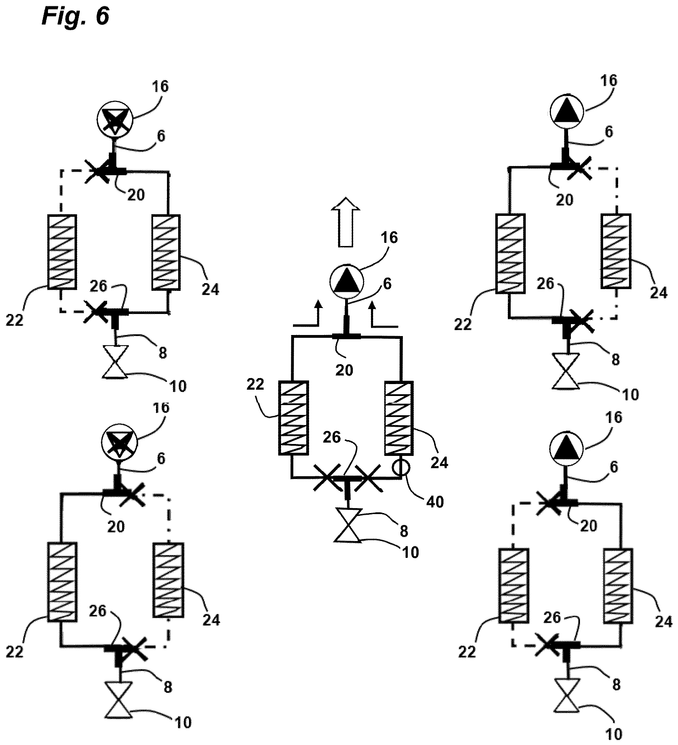

La figure 6 présente une deuxième méthode de vidange par pompage forcé, utilisée dans le cas où la méthode par transfert naturel n'est pas suffisante pour assurer le transfert complet.

La partie supérieure présente une utilisation transférée de l'échangeur du ballon d'eau chaude 24 vers l'échangeur de chauffage et climatisation 22, et la partie inférieure une utilisation transférée dans l'autre sens.

Le premier schéma de la partie supérieure présente une position initiale de fonctionnement avec l'échangeur du ballon 24, les deux vannes trois voies 20, 26 sont ouvertes vers cet échangeur et fermées vers l'échangeur de chauffage et climatisation 22. Le premier schéma de la partie inférieure présente une position initiale inversée, avec l'échangeur de chauffage et climatisation 22 ouvert et l'échangeur du ballon 24 fermé. Le compresseur 16 est arrêté, ou reste en fonctionnement si la climatisation est déjà active.

Le deuxième schéma commun pour les parties supérieure et inférieure, présente une fermeture complète des deux voies de la deuxième vanne trois voies 26 dirigées vers les échangeurs internes 22, 24, afin de les isoler entre eux, et une ouverture complète de la première vanne trois voies 20 vers les deux échangeurs internes 22, 24. On réalise ensuite après le positionnement de la vanne quatre voies 18, un tirage par le compresseur 16 travaillant en aspiration à partir de ces échangeurs internes 22, 24. Le fluide à basse pression se vaporise, pour être rejeté vers l'échangeur avec un milieu extérieur 12 où il se condense afin d'être stocké.

Un capteur de pression 40 ou une sonde de température, ou tout autre moyen permettant de contrôler la pression, disposé entre les deux vannes trois voies 20, 26, par exemple entre l'échangeur de ballon 24 et la deuxième vanne trois voies 26, permet de mesurer la baisse de pression dans le circuit des deux échangeurs internes 22, 24, et de contrôler pour une pression suffisamment basse indiquant une évaporation suffisante, que tout le fluide est passé dans l'échangeur avec un milieu extérieur 12.

Le troisième schéma de chaque partie supérieure ou inférieure présente une position finale, où on a manœuvré les deux vannes trois voies 20, 26 afin de mettre en fonction respectivement l'échangeur de chauffage et climatisation 22 ou l'échangeur du ballon 24 en isolant l'autre.

L'invention permet de réaliser directement avec un fluide frigorigène, sans passer par un fluide caloporteur, et sans circulateur de ce dernier fluide qui consommerait une électricité, toutes les combinaisons possibles de chauffage ou de refroidissement du bâtiment, et de chauffage de l'eau chaude sanitaire.

## Revendications

1. - Procédé pour un système thermodynamique de chauffage et de climatisation d'un bâtiment, et de production d'eau chaude sanitaire, comprenant :
- un circuit de fluide frigorigène,
- un dispositif de compresseur (14) comportant une vanne quatre voies pilotée (18) insérée dans une canalisation (6) dudit circuit, comprenant deux voies reliées aux deux côtés de cette canalisation (6), et deux autres voies reliées à un compresseur (16) travaillant dans un sens unique,
- un détendeur (10),
- un échangeur thermique avec un milieu extérieur (12),
- un échangeur thermique de chauffage et de climatisation (22) du bâtiment,
et
- un échangeur thermique d'un ballon d'eau chaude (24),
le système comportant dans une boucle successivement le détendeur (10) pouvant travailler dans les deux sens de circulation, l'échangeur avec un milieu extérieur (12), le dispositif de compresseur (14) pouvant travailler dans les deux sens de circulation, et un groupe d'échangeurs thermiques comprenant l'échangeur de chauffage et climatisation (22) et l'échangeur du ballon d'eau chaude (24) disposés en parallèle,
**caractérisé en ce que**
ce groupe comporte une première vanne trois voies sur l'entrée (20) et une deuxième vanne trois voies sur la sortie (26), pouvant mettre alternativement dans le circuit l'échangeur de chauffage et climatisation (22) ou l'échangeur du ballon d'eau chaude (24),
ledit procédé de changement de service, par transfert naturel du fluide de l'échangeur du ballon d'eau chaude (24) vers l'échangeur de chauffage et climatisation (22), étant également configuré pour qu'à partir d'une position initiale de fonctionnement avec l'échangeur du ballon (24), les deux vannes trois voies (20, 26) étant ouvertes vers cet échangeur et fermées vers l'échangeur de chauffage et climatisation (22), le compresseur (16) étant en fonctionnement de sorte à augmenter la température de condensation dans l'échangeur du ballon (24), la chauffe étant surveillée grâce à une sonde de température ou un capteur de pression, ou tout autre moyen permettant de contrôler la pression, la chauffe étant arrêtée lorsque la température de condensation souhaitée est considérée comme suffisante pour créer une différence de pression positive entre l'échangeur du ballon (24) et l'échangeur avec un milieu extérieur (12), de sorte que le fluide évaporé dans l'échangeur du ballon (24) se déplace rapidement vers l'échangeur avec un milieu extérieur (12) présentant une température plus froide, où il se condense, puis dans une deuxième étape les deux vannes trois voies (20, 26) sont basculées pour fermer l'échangeur du ballon (24) et ouvrir l'échangeur de chauffage et climatisation (22).

2. - Procédé selon la revendication 1, **caractérisé en ce que** chaque vanne trois voies (20, 26) peut fermer indépendamment chaque voie tournée vers l'échangeur thermique de chauffage et de climatisation (22) du bâtiment, ou l'échangeur thermique d'un ballon d'eau chaude (24).

3. - Procédé selon l'une quelconque des revendications précédentes, **caractérisé en ce que** l'échangeur de chauffage et climatisation (22) ou l'échangeur du ballon (24) comporte un moyen de chauffage complémentaire (42).

4. - Procédé selon l'une quelconque des revendications précédentes, **caractérisé en ce que** l'échangeur de chauffage et climatisation (22) ou l'échangeur du ballon (24) comporte un moyen permettant de contrôler la pression, comme un capteur de pression ou un capteur de température (40).

## Patentansprüche

1. Verfahren für ein thermodynamisches System zur Heizung und Klimatisierung eines Gebäudes und zur Erzeugung von Brauchwarmwasser, umfassend:
- einen Kältefluidkreislauf,
- eine Kompressorvorrichtung (14), die ein gesteuertes Vierwegeventil (18) aufweist, das in eine Leitung (6) des Kreislaufs eingesetzt ist, die zwei Wege umfasst, die an beiden Seiten dieser Leitung (6) verbunden sind, und zwei weitere Wege, die mit einem Kompressor (16) verbunden sind, der in eine Richtung arbeitet,
- einen Druckminderer (10),
- einen Wärmetauscher mit einem äußeren Medium (12),
- einen Heizungs- und Klimatisierungswärmetauscher (22) des Gebäudes,
und
- einen Warmwasserspeicherwärmetauscher (24),
wobei das System in einer Schleife nacheinander das Expansionsventil (10) aufweist, das in beiden Strömungsrichtungen arbeiten kann, den Wärmetauscher mit einem äußeren Medium (12), die Kompressorvorrichtung (14), die in beiden Strömungsrichtungen arbeiten kann, und eine Gruppe von Wärmetauschern, die den Heizungs- und Klimatisierungswärmetauscher (22) und den Warmwasserspeicherwärmetauscher (24) umfassen, die parallel angeordnet sind,
**dadurch gekennzeichnet, dass**
diese Gruppe ein erstes Dreiwegeventil an dem Eingang (20) und ein zweites Dreiwegeventil an dem Ausgang (26) aufweist, das abwechselnd den Heizungs- und Klimatisierungswärmetauscher (22) oder den Warmwasserspeicherwärmetauscher (24) in den Kreislauf schalten kann,
wobei das Verfahren zum Wechseln des Betriebs durch natürlichen Transfer des Fluids von dem Warmwasserspeicherwärmetauscher (24) zu dem Heizungs- und Klimatisierungswärmetauscher (22), auch so eingerichtet ist, dass ausgehend von einer Ausgangsposition des Betriebs mit dem Speicherwärmetauscher (24), wobei die beiden Dreiwegeventile (20, 26) zu diesem Wärmetauscher geöffnet und zu dem Heizungs- und Klimatisierungswärmetauscher (22) geschlossen sind, wobei der Kompressor (16) so arbeitet, dass er die Kondensationstemperatur in dem Speicherwärmetauscher (24) erhöht, wobei die Heizung durch einen Temperaturfühler oder einen Drucksensor oder ein anderes Mittel zur Druckregelung überwacht wird, wobei die Heizung gestoppt wird, wenn die gewünschte Kondensationstemperatur als ausreichend angesehen wird, um eine positive Druckdifferenz zwischen dem Speicherwärmetauscher (24) und dem Wärmetauscher mit einem äußeren Medium (12) zu erzeugen, so dass das in dem Speicherwärmetauscher (24) verdampfte Medium sich schnell zu dem Wärmetauscher mit einem kühleren äußeren Medium (12) bewegt, wo es kondensiert, und dann in einem zweiten Schritt die beiden Dreiwegeventile (20, 26) umgeschaltet werden, um den Speicherwärmetauscher (24) zu schließen und den Heizungs- und Klimatisierungswärmetauscher (22) zu öffnen.

2. Verfahren nach Anspruch 1, **dadurch gekennzeichnet, dass** jedes Dreiwegeventil (20, 26) unabhängig jeden zu dem Heizungs- und Klimatisierungswärmetauscher (22) des Gebäudes oder zu dem Wärmetauscher eines Warmwasserspeichers (24) gerichteten Weg schließen kann.

3. Verfahren nach einem der vorhergehenden Ansprüche, **dadurch gekennzeichnet, dass** der Heizungs- und Klimatisierungswärmetauscher (22) oder der Ballontauscher (24) ein ergänzendes Heizmittel (42) aufweist.

4. Verfahren nach einem der vorhergehenden Ansprüche, **dadurch gekennzeichnet, dass** der Heizungs- und Klimatisierungswärmetauscher (22) oder der Ballontauscher (24) ein Mittel zur Drucküberwachung, wie einen Drucksensor oder einen Temperatursensor (40), aufweist.

## Claims

1. A method for a thermodynamic system for heating and air-conditioning of a building, and for domestic hot water production, comprising:
- a refrigerant circuit,
- a compressor device (14) including a controlled four-way valve (18) inserted in a line (6) of said circuit, comprising two ports connected to both sides of said line (6), and two other ports connected to a compressor (16) operating in a single direction,
- an expansion valve (10),
- an outdoor heat exchanger (12),
- a heating and air-conditioning heat exchanger (22) of the building, and
- a hot-water tank heat exchanger (24),
the system including, in a loop, successively the expansion valve (10) operable in both flow directions, the outdoor heat exchanger (12), the compressor device (14) operable in both flow directions, and a group of heat exchangers comprising the heating and air-conditioning heat exchanger (22) and the hot-water tank heat exchanger (24) disposed in parallel,
**characterized in that**
this group includes a first three-way valve at the inlet (20) and a second three-way valve at the outlet (26), able to alternately place in the circuit the heating and air-conditioning heat exchanger (22) or the hot-water tank heat exchanger (24),
said service change method, by natural transfer of the refrigerant from the hot-water tank heat exchanger (24) to the heating and air-conditioning heat exchanger (22), being further configured such that, starting from an initial operating position with the tank heat exchanger (24), both three-way valves (20, 26) are open toward this heat exchanger and closed toward the heating and air-conditioning heat exchanger (22), and the compressor (16) is operating so as to increase the condensation temperature in the tank heat exchanger (24), the heating being monitored thanks to a temperature probe or a pressure sensor, or any other means for controlling pressure, and the heating being stopped when the desired condensation temperature is deemed sufficient to create a positive pressure difference between the tank heat exchanger (24) and the outdoor heat exchanger (12), such that the vaporized refrigerant in the tank heat exchanger (24) quickly moves toward the outdoor heat exchanger (12), which has a lower temperature, where it condenses, then, in a second step, the two three-way valves (20, 26) are switched to close the tank heat exchanger (24) and open the heating and air-conditioning heat exchanger (22).

2. The method according to claim 1, **characterized in that** each three-way valve (20, 26) is capable of independently closing each port directed toward the heating and air-conditioning heat exchanger (22) of the building or the hot-water tank heat exchanger (24).

3. The method according to any one of the preceding claims, **characterized in that** the heating and air-conditioning heat exchanger (22) or the tank heat exchanger (24) includes an auxiliary heating means (42).

4. The method according to any one of the preceding claims, **characterized in that** the heating and air-conditioning heat exchanger (22) or the tank heat exchanger (24) includes a means for controlling pressure, such as a pressure sensor or a temperature sensor (40).
